# EUROPÄISCHE PATENTSCHRIFT

(11) **EP 2 625 401 B1**
(45) Veröffentlichungstag und Bekanntmachung des Hinweises auf die Patenterteilung: **16.08.2017**
(21) Anmeldenummer: 11776349.0
(22) Anmeldetag: 05.10.2011
(51) Int. Cl.: F02B 23/06, F02F 3/14

(54) **VERBESSERUNGEN AN EINEM BRENNRAUMMULDENRAND UND AN EINEM BRENNRAUMMULDENGRUND EINES KOLBENS EINER BRENNKRAFTMASCHINE**
IMPROVEMENTS OF A COMBUSTION-CHAMBER BOWL RIM AND OF A COMBUSTION-CHAMBER BOWL BASE OF A PISTON OF AN INTERNAL COMBUSTION ENGINE
AMÉLIORATIONS D'UN BORD DE CAVITÉ DE CHAMBRE DE COMBUSTION ET D'UNE BASE DE CAVITÉ DE CHAMBRE DE COMBUSTION D'UN PISTON D'UN MOTEUR À COMBUSTION INTERNE

(30) Priorität: 05.10.2010 DE 102010047359
(43) Veröffentlichungstag der Anmeldung: 14.08.2013
(73) Patentinhaber: KS Kolbenschmidt GmbH, 74172 Neckarsulm (DE)
(72) Erfinder: GNIESMER, Volker, 31061 Alfeld (DE)
(74) Vertreter: Greif, Thomas
(86) Internationale Anmeldenummer: PCT/EP2011/004950
(87) Internationale Veröffentlichungsnummer: WO 2012/045443

(56) Entgegenhaltungen:
- EP-A1- 0 427 389
- EP-A1- 1 386 687
- DE-A1- 2 124 595
- DE-A1- 19 813 430
- DE-A1- 19 902 864
- DE-A1-102005 034 905
- DE-B- 1 122 325
- DE-U1- 8 028 685
- GB-A- 2 079 401
- JP-A- 62 081 260

## Beschreibung

Die Erfindung betrifft einen Kolben einer Brennkraftmaschine, aufweisend einen Kolbenboden mit Ringnuten sowie eine Brennraummulde, und einen Kolbenschaft mit einer Bolzenbohrung zur Aufnahme eines Bolzens, sowie ein Verfahren zur Herstellung eines solchen Kolbens, gemäß den Merkmalen des jeweiligen Oberbegriffes der unabhängigen Patentansprüche.

Es sind grundsätzlich verschiedene Bauformen von Kolben für Brennkraftmaschinen bekannt, wie beispielsweise einteilige Kolben, deren Kolbenrohling in einem Stück geschmiedet oder gegossen wird. Daneben sind im Betriebszustand fertige einteilige Kolben bekannt, die beispielsweise aus einem Oberteil und einem Unterteil bestehen, wobei beide Teile in einem geeigneten Fügeverfahren unlösbar miteinander verbunden werden. Darüber hinaus sind sogenannte Pendelschaftkolben bekannt, bei denen ein Kolbenoberteil über einen Bolzen mit einem Kolbenschaftteil verbunden wird. Allen diesen Kolben, unabhängig von der Bauform, ist gemeinsam, dass sie einen Kolbenboden mit Ringnuten sowie eine in dem Kolbenboden angeordnete Brennraummulde aufweisen. Darüber hinaus weist der einsatzbereite Kolben einen Kolbenschaft zum Beispiel mit durchgehend zylinderförmigen tragenden Kolbenschäften oder mit teilweise tragenden Schaftwandabschnitten auf, wobei in dem Kolbenschaft in an sich bekannter Weise eine Bolzenbohrung angeordnet ist, die einen Bolzen aufnimmt, um den Kolben mit dem Pleuel zu verbinden.

Im Rahmen der vorstehend genannten Bauformen von Kolben ist es Gegenstand der vorliegenden Erfindung, dass im Kolbenboden eine Brennraummulde angeordnet ist. Eine solche Brennraummulde und ihre Funktion ist hinlänglich bekannt.

Im Stand der Technik ist es seit mehreren Jahrzehnten bekannt, den Brennraummuldenrand der Brennraummulde aufzuschmelzen, so dass dadurch eine Gefügeänderung stattfindet und nach dem Erstarren des aufgeschmolzenen Bereiches ein wesentlich widerstandsfähiger Bereich des Brennraummuldenrandes zur Verfügung steht, als dies mit der Herstellung des Kolbenrohlings durch ein Gieß- oder Schmiedeverfahren erzielbar wäre. Es gibt verschiedene Verfahren, wie der Brennraummuldenrand umgeschmolzen (aufgeschmolzen) werden kann, um die gewünschte Festigkeit dieses Randbereiches der Brennraummulde zu erhöhen. Für die langjährige Entwicklung auf diesem Gebiet sind stellvertretend die deutsche Auslegeschrift 1 122 325, die deutsche Offenlegungsschrift 2 124 595, das deutsche Gebrauchsmuster GM 80 28 685, die DE 199 02 864 A1 oder auch die EP 1 386 687 A1 genannt. Aus diesem repräsentativ genannten Stand der Technik ergibt sich, dass es schon jahrzehntelange Bemühungen gegeben hat und immer noch gibt, die Festigkeit des Brennraummuldenrandes im Kolbenboden des Kolbens der Brennkraftmaschine zu verbessern.

Diese Bemühungen sind auch nach wie vor im Gange, da infolge der gesteigerten Anforderungen an moderne Brennkraftmaschinen, insbesondere im Hinblick auf eine Reduzierung des Kraftstoffverbrauches bei gleichzeitiger Reduzierung der Schadstoffemissionen, die Verbrennungsdrücke deutlich gestiegen sind. Diese Steigerung der Verbrennungsparameter hat aber gleichzeitig zu einer weiteren Zunahme der Belastung der Brennraummulde, insbesondere auch des Brennraummuldenrandes geführt, so dass hier weitere Entwicklungen und Verbesserungen nötig sind.

Weiterhin ist darauf hinzuweisen, dass der Brennraummuldenrand, genauso wie auch der Brennraummuldengrund von Kolben von Brennkraftmaschinen besonders belastete Bereiche sind. Denn infolge der erhöhten Temperaturbelastung entweder im Brennraummuldenrandbereich und/oder im Brennraummuldengrundbereich dehnen sich stärker aus als die benachbarten (beim Brennraummuldenrand in einer Ebene parallel zum Kolbenboden dahinterliegende Bereiche bzw. beim Brennraummuldenrand die in Bezug auf die Kolbenhubachse unter dem Brennraummuldengrund liegenden Bereiche) stärker aus. Durch das dahinter bzw. darunter liegende kältere Material werden der Muldenrand bzw. der Muldengrund in der Ausdehnung während des Betriebes des Kolbens in der Brennkraftmaschine behindert. Dadurch kommt es zu einer plastischen Verformung unter hohen Druckspannungen. Auf Grund von diesen Belastungen und auch auf Grund von Fehlbildungen im Gefüge dieses derart beanspruchten Bereiches kommt es zu Spannungsbildungen, die im schlimmsten Fall zu einem Bruch oder einem Riss führen können, welcher einen Ausfall des Kolbens zur Folge hat. Um diese plastische Verformung unter hohem Druck zu vermeiden, sind schon Maßnahmen bekannt geworden, wie z. B. dass der Brennraummuldenrand eloxiert wird oder mit einem faserverstärkten Material beaufschlagt wird. Hierbei sind jedoch zusätzliche Verfahrensschritte (z. B. durch das Eloxieren) und weitere, zum Teil gefährliche Materialen zu verwenden, so dass diese Maßnahmen zur Spannungsminimierung bisher unbefriedigend geblieben sind.

Der Erfindung liegt daher die Aufgabe zugrunde, einen Kolben mit einer Brennraummulde und ein Verfahren zur Herstellung eines solchen Kolbens anzugeben, der den weiter gestiegenen Anforderungen an den Kolben im Betrieb in der Brennkraftmaschine noch besser gerecht wird als bekannte Kolben im Stand der Technik.

Diese Aufgabe ist durch die Merkmale der beiden unabhängigen Patentansprüche gelöst.

Bei dem erfindungsgemäßen Kolben der Brennkraftmaschine ist erfindungsgemäß vorgesehen, dass sowohl der Brennraummuldenrand als auch der Brennraummuldengrund von einem aufgeschmolzenen und erstarrten Bereich gebildet sind.

Bei dem Verfahren zur Herstellung eines Kolbens ist vorgesehen, dass sowohl der Brennraummuldenrand als auch der Brennraummuldengrund aufgeschmolzen werden und anschließend erstarren.

Das Aufschmelzen sowie das anschließende Erstarren sowohl des Brennraummuldenrandes als auch des Brennraummuldengrundes haben den Vorteil, dass die infolge der Verbrennungsparameter in der Brennkraftmaschine (gestiegene Verbrennungsdrücke und gestiegene Verbrennungstemperaturen) besonders belastete Brennraummulde gegenüber Kolben, bei denen nur der Brennraummuldenrand aufgeschmolzen und erstarrt und somit gefestigt ist, hinsichtlich ihrer Belastbarkeit deutlich verbessert ist. Denn durch diese erfindungsgemäß gefestigten Bereiche (Brennraummuldenrand und gleichzeitig der Brennraummuldengrund) sind genau diejenigen Bereiche, die infolge der Verbrennungsparameter besonders beansprucht sind, besonders gefestigt, so dass solcher Art hergestellte Kolben besonders widerstandsfähig sind und langlebig in Brennkraftmaschinen eingesetzt werden können, die den heutigen Anforderungen an Verbrauchs- und Schadstoffemissionen besonders gut gerecht werden.

Für die Umschmelzverfahren kommen die schon im Stand der Technik erwähnten Verfahren, wie insbesondere Lichtbogen-Schweißen, Laserstrahl, Elektronenstrahl oder dergleichen (wobei diese Aufzählung nicht abschließend ist) in Betracht.

Außerdem ist es denkbar, dass vor und / oder während des Umschmelzvorganges eine zusätzliche Erwärmung des Kolbens, die deutlich höher ist als die Umgebungstemperatur, die während der Produktion des Kolbens (bzw. dessen Kolbenrohling) herrscht, erfolgt, um die sich nach der Behandlung des Kolbens ergebenden Gefügestrukturen weiter zu verbessern.

Ebenso ist es denkbar, dass der Brennraummuldenrand und der Brennraummuldengrund des Kolbenrohlings, die aus dem gleichen Material bestehen, umgeschmolzen wird. Alternativ dazu ist es denkbar, dass die umzuschmelzenden Bereiche des Brennraummuldenrandes und des Brennraummuldengrundes aus unterschiedlichen Materialien bestehen (dies ist insbesondere dann der Fall, wenn der Kolben aus einem Oberteil und einem Unterteil, die zusammengefügt werden, bestehen und die beiden Teile aus unterschiedlichen Materialien gebildet sind) oder wenn den beiden Bereichen des Randes und des Grundes (bestehend aus gleichem Material oder aus voneinander abweichenden Material) Zusatzwerkstoffe wie Legierungen oder dergleichen beim Umschmelzen zugefügt werden. Erfindungsgemäß ist vorgesehen, dass der Brennraummuldenrand von einem Material mit einem vorgebbaren Wärmeausdehnungskoeffizienten gebildet ist und das hinter dem Brennraummuldenrand sich befindende Material einen dem gegenüber höheren Wärmeausdehnungskoeffizienten aufweist. Der Begriff "hinter" ist dabei so verstehen, dass in Bezug auf die Kolbenhubachse der Brennraummuldenrand eine bestimmte Höhe aufweist und die nach innen weisenden radial umlaufenden Endbereiche den Brennraummuldenrand bilden. Geometrisch handelt es sich bei dem Brennraummuldenrand also quasi um ein ringförmiges Gebilde, wobei dieses nicht zwangsweise einen kreisförmigen Querschnitt aufweisen muss. In der Ebene in der Höhe des Brennraummuldenrandes befindet sich dahinterliegend (also nach außen weisend, z. B. in Richtung des Ringfeldes) ein Bereich, der ebenfalls von dem Kolbenboden des Kolbens gebildet ist. Hier ist jetzt erfindungsgemäß vorgesehen, dass der in Richtung der Brennraummulde weisende Endbereich des Brennraummuldenrandes aus einem Material besteht, das einen vorgebbaren Wärmeausdehnungskoeffizienten aufweist. Der in dieser Ebene vorhandene Brennraummuldenrand, der parallel zu der Oberfläche des Kolbenbodens, der in Richtung der Verbrennungsseite weist, ausgerichtet ist, wird von einem Material gebildet, das einen dem gegenüber höheren Wärmeausdehnungskoeffizienten aufweist. Das bedeutet, dass der mit hoher Temperatur beaufschlagte Brennraummuldenrand aus einem ersten Material besteht, welches gezielt einen geringeren Wärmeausdehnungskoeffizienten besitzt als das dahinterliegende kälter werdende oder kältere Material. Das dahinterliegende kälter werdende Material dehnt sich folglich annähernd gleich aus wie das Material, welches den Brennraummuldenrand bildet. Die Temperaturdifferenzen werden mittels der unterschiedlichen Wärmeausdehnungskoeffizienten kompensiert, so dass in Folge dessen eine Spannungsminimierung in diesem Bereich gegeben ist. Erreicht werden kann der lokale Werkstoffunterschied im Bereich des Brennraummuldenrandes durch lokale Werkstofflegierungsbildung. So können beispielsweise dem Material, dass den Brennraummuldenrand bildet, erhöhende oder vermindernde Legierungselemente bezüglich des Wärmeausdehnungskoeffizienten beigemischt werden. Den Wärmeausdehnungskoeffizient erhöht z. B. Kupfer, wohingegen Eisen als Legierungselement den Wärmeausdehnungskoeffizienten vermindert. Die Beigabe kann beispielsweise durch Auftragsschweißen erfolgen.

Alternativ oder ergänzend zu den vorstehenden Maßnahmen kommt erfindungsgemäß in Betracht, dass der sichtbare Bereich des Brennraummuldengrundes von einem Material mit einem vorgebbaren Wärmeausdehnungskoeffizienten gebildet ist und das unter dem Brennraummuldengrund sich befindende Material einen demgegenüber höheren Wärmeausdehnungskoeffizienten aufweist. Auch hier gilt wieder, dass das Material des Brennraummuldengrundes welches der Brennraummulde zugewandt ist, mit höheren Temperaturen beaufschlagt ist als das unter dem Brennraummuldengrund liegende Material des Kolbens (welches in Richtung des Kolbenbolzens weist und oftmals bei Kühlkanalkolben durch eingespritztes oder auf diesen Bereich aufgespritztes Kühlmedium, beispielsweise Motoröl, zusätzlich gekühlt wird. Durch die erfindungsgemäße Bildung des Brennraummuldengrundes und das (bei Betrachtung der Kolbenhubachse) darunterliegende Material mit unterschiedlichen Wärmeausdehnungskoeffizienten können sich auch hier diese Bereiche vergleichmäßigt ausdehnen, so dass die Temperaturdifferenzen mittels der unterschiedlichen Wärmeausdehnungskoeffizienten kompensiert werden. Auch hierbei wird in dem Bereich des Brennraummuldengrundes in vorteilhafterweise die sich auf Grund der Temperaturdifferenzen ergebenden Spannungen wesentlich minimiert. Dabei ist darauf hinzuweisen, dass mit der erfindungsgemäßen Maßnahme sowohl beim Brennraummuldenrand als auch beim Brennraummuldengrund sich im Verlauf des Überganges zwischen den einander benachbarten Materialen mit unterschiedlichen Wärmeausdehnungskoeffizienten ein stetiger und kein abrupter Materialwechsel stattfindet, so dass dadurch in weiterer vorteilhafterweise die Temperaturdifferenzen ausgeglichen werden können.

In besonders vorteilhafter Weise wird ein Energieeintrag, der zwecks Aufschmelzen des Brennraummuldenrandes und des Brennraummuldengrundes gleichzeitig durch eine Energiequelle eingetragen, so dass dadurch der gewünschte Umschmelz- und anschließende Erstarrprozess schnell und optimal aufeinander abgestimmt durchgeführt werden kann, was insbesondere bei der Serienherstellung von Kolben von besonderem Vorteil ist, da dadurch die Taktzeiten reduziert werden. Als Energiequelle kommen die vorstehend genannten Verfahren des Lichtbogen-Schweißens, die Anwendung von Laserstrahlen, Elektrodenstrahlen oder dergleichen wieder in Betracht. Alternativ kann daran gedacht werden, dass zunächst der Brennraummuldenrand aufgeschmolzen und abgewartet wird, bis der Bereich erstarrt ist, bevor anschließend der Brennraummuldengrund aufgeschmolzen und abgewartet wird, bis dieser Bereich erstarrt wird. Auch die umgekehrte Reihenfolge ist denkbar, so dass zunächst der Brennraummuldengrund aufgeschmolzen und abgewartet wird, bis dieser Bereich erstarrt ist, bevor der Brennraummuldenrand aufgeschmolzen und abgewartet wird, bis dieser Bereich erstarrt ist. Darüber hinaus ist es schließlich noch denkbar, dass zum Beispiel zuerst der Brennraummuldengrund aufgeschmolzen wird und schon während der Erstarrung dieses aufgeschmolzenen Bereiches mit dem Aufschmelzen des Brennraummuldenrandes begonnen wird. Auch diese beiden Verfahrensschritte können in umgekehrter Reihenfolge angewendet werden. Dies hat den Vorteil, dass mit dem Aufschmelzen des ersten Bereiches (entweder Brennraummuldenrand oder Brennraummuldengrund) der zweite Bereich (entweder Brennraummuldengrund oder Brennraummuldenrand) durch den Energieeintrag schon vorgewärmt wird, so dass es sich in vorteilhafter Weise erübrigt, eine zusätzliche Aufwärmung des Kolbenbodens vorzunehmen.

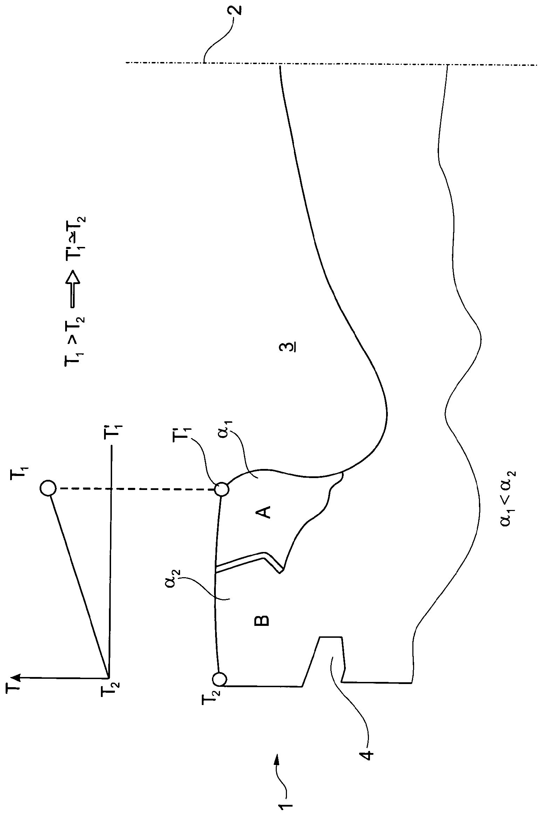

In der einzigen Figur ist ausschnittweise ein Kolbenboden 1 eines nicht näher dargestellten Kolbens gezeigt, der um eine Kolbenhubachse 2 herum eine Brennraummulde 3 aufweist. Auf der äußeren Oberfläche des Kolbenbodens ist zumindest eine Ringnut 4 vorhanden. Hier ist die erfindungsgemäße Maßnahme dadurch zu erkennen, dass der Brennraummuldenrand A einen ersten Wärmeausdehnungskoeffizienten α₁ aufweist und der dahinterliegende Bereich des Kolbenbodens 1, hier mit B bezeichnet, einen davon abweichenden Wärmeausdehnungskoeffizienten α₂ aufweist, wobei gilt: _{α1} < _{α2}. Daraus ergibt sich, das, betrachtet über den Verlauf des Bereiches von A nach B, die im Bereich des Brennraummuldenrandes A herrschende Temperatur T₁, die eigentlich größer ist als die weiter außen herrschende Temperatur T₂, deutlich abgesenkt wird auf eine Temperatur T₁. Dabei ist anzustreben, dass der Temperaturverlauf beim Übergang des Brennraummuldenrandes A bis nach außen gleichmäßig ist, d. h., das in dem Bereich des Kolbenbodens, der in Richtung des Verbrennungsraumes weist, gleiche oder nahezu gleiche Temperaturen bzw. Temperaturniveau herrscht.

Das gleiche, wie es vorstehend zu den Verhältnissen am Brennraummuldenrand beschriebenen worden ist, gilt auch alternativ oder ergänzend für den Brennraummuldengrund, wobei hier der Temperaturverlauf nicht rechtwinkelig zu der Kolbenhubachse, sondern der Kolbenhubachse folgend vergleichmäßigt werden soll.

## Patentansprüche

1. Kolben einer Brennkraftmaschine, aufweisend einen Kolbenboden (1) mit Ringnuten sowie eine Brennraummulde (3), und einem Kolbenschaft mit einer Bolzenbohrung zur Aufnahme eines Bolzens, **dadurch gekennzeichnet, dass** sowohl ein Brennraummuldenrand (A) als auch ein Brennraummuldengrund der Brennraummulde (3) von einem aufgeschmolzenen und erstarrten Bereich gebildet sind, wobei der Brennraummuldenrand (A) von einem Material mit einem vorgebbaren Wärmeausdehnungskoeffizienten gebildet ist und das sich hinter dem Brennraummuldenrand (A) befindende Material einen demgegenüber höheren Wärmeausdehnungskoeffizienten aufweist oder der Brennraummuldengrund von einem Material mit einem vorgebbaren Wärmeausdehnungskoeffizienten gebildet ist und das unter dem Brennraummuldengrund befindliche Material einen demgegenüber höheren Wärmeausdehnungskoeffizienten aufweist.

2. Kolben nach Anspruch 1, **dadurch gekennzeichnet, dass** die aufgeschmolzenen und erstarrten Bereiche von dem gleichen Material gebildet sind.

3. Kolben nach Anspruch 1, **dadurch gekennzeichnet, dass** die aufgeschmolzenen und erstarrten Bereiche aus unterschiedlichen Materialien gebildet sind.

## Claims

1. Piston of an internal combustion engine, having a piston head (1) with annular grooves and a combustion chamber depression (3), and a piston skirt with a pin bore for receiving a pin, **characterized in that** both a combustion chamber depression edge (A) and a combustion chamber depression base of the combustion chamber depression (3) are formed by a melted and solidified region, wherein the combustion chamber depression edge (A) is formed by a material having a predeterminable co-efficient of thermal expansion and the material situated behind the combustion chamber depression edge (A) has a co-efficient of thermal expansion which is higher than it, or the combustion chamber depression base is formed by a material having a predeterminable co-efficient of thermal expansion and the material situated below the combustion chamber depression base has a co-efficient of thermal expansion which is higher than it.

2. Piston according to Claim 1, **characterized in that** the melted and solidified regions are formed by the same material.

3. Piston according to Claim 1, **characterized in that** the melted and solidified regions are formed from different materials.

## Revendications

1. Piston de moteur à combustion interne, comportant un fond de piston (1) avec des rainures annulaires ainsi qu'une cavité de chambre de combustion (3) et une tige de piston avec un alésage de boulon pour recevoir un boulon, **caractérisé en ce que** tant un bord de cavité de chambre de combustion (A) qu'une base de cavité de chambre de combustion de la cavité de chambre de combustion (3) sont formés par une zone fondue et rigidifiée, le bord de cavité de chambre de combustion (A) étant formé dans une matière avec un coefficient de dilatation thermique prédéfinissable et la matière se trouvant derrière le bord de cavité de chambre de combustion (A) présentant un coefficient de dilatation thermique plus élevé ou la base de cavité de chambre de combustion étant formé avec une matière avec un coefficient de dilatation thermique prédéfinissable et la matière se trouvant sous la base de cavité de chambre de combustion présentant un coefficient de dilatation thermique plus élevé.

2. Piston selon la revendication 1, **caractérisé en ce que** les zones fondues et rigidifiées sont formées à partir de la même matière.

3. Piston selon la revendication 1, **caractérisé en ce que** les zones fondues et rigidifiées sont formées à partir de matières différentes.
